# EUROPÄISCHE PATENTSCHRIFT

(11) **EP 0 619 763 B1**
(45) Veröffentlichungstag und Bekanntmachung des Hinweises auf die Patenterteilung: **12.06.1996**
(21) Anmeldenummer: 93924091.7
(22) Anmeldetag: 02.11.1993
(51) Int. Cl.: B08B 9/30

(54) **GEFÄSSREINIGUNGSMASCHINE MIT INSPEKTIONSVORRICHTUNG**
CONTAINER-WASHING MACHINE WITH AN INSPECTION SYSTEM
MACHINE A NETTOYER LES RECIPIENTS AVEC DISPOSITIF D'INSPECTION

(30) Priorität: 04.11.1992 DE 4237207
(43) Veröffentlichungstag der Anmeldung: 19.10.1994
(73) Patentinhaber: KRONES AG HERMANN KRONSEDER MASCHINENFABRIK, D-93073 Neutraubling (DE)
(72) Erfinder: WITTMANN, Norbert, D-93105 Tegernheim (DE)
(74) Vertreter: Grünecker, Kinkeldey, Stockmair & Schwanhäusser Anwaltssozietät
(86) Internationale Anmeldenummer: EP9303070
(87) Internationale Veröffentlichungsnummer: WO9409923

(56) Entgegenhaltungen:
- DE-A- 3 607 720
- US-A- 4 619 133
- PATENT ABSTRACTS OF JAPAN vol. 16, no. 346 (M-1286)27. Juli 1992 & JP,A,04 105 852 (TOSHIBA CORP.) 7. April 1992

## Beschreibung

Die Erfindung bezieht sich auf eine Gefäßreinigungsmaschine gemäß dem Oberbegriff des Anspruchs 1.

Bei derartigen bekannten Gefäßreinigungsmaschinen (z.B. DE-A-3 607 720) steigt zum Feststellen des Verschleißes bzw. des inneren Zustandes der Maschine ein Monteur in den Innenraum der Maschine, wozu vorher nachteiligerweise der Flüssigkeitsinhalt der Tauchbäder abgelassen werden muß und einige Förderkorbreihen aus der Maschine entfernt werden. Darüber hinaus ist die Innenraumkontrolle durch den Monteur wegen der Dunkelheit und der extrem beengten Platzverhältnisse sehr unangenehm und mit Unfallgefahren, wie Verletzungen durch Restlaugenpfützen und Quetschgefahr durch die beweglichen Innenteile der Maschine, verbunden. Weiterhin erfordert die Innenraumkontrolle durch den Monteur sehr viel Zeit.

Die Aufgabe der Erfindung besteht somit darin, eine Maschine der eingangs genannten Art so weiterzubilden, daß eine gefahrlose, zuverlässige und schnelle Inspektion des Innenraumes der Gefäßreinigungsmaschine möglich ist.

Zur Lösung dieser Aufgabe wird erfindungsgemäß vorgeschlagen, daß bei der Gefäßreinigungsmaschine gemäß dem Oberbegriff des Anspruchs 1 eine Inspektionsvorrichtung an der Förderkette angeordnet ist. Mittels der Förderkette wird die Inspektionsvorrichtung durch den Innenraum der Gefäßreinigungsmaschine transportiert, wobei der Zustand der Maschine laufend kontrolliert wird. Die Inspektionsvorrichtung ist auch bei gefüllten Tauchbädern betriebsbereit. Ein Ablassen der Tauchbäder bei einer Kontrolle der Maschine ist nun nicht unbedingt erforderlich. Besonders vorteilhaft ist jedoch die gefahrlose, zuverlässige und schnelle Durchführung der Inspektion des Innenraumes der Gefäßreinigungsmaschine.

Um die Inspektion der Gefäßreinigungsmaschine effektiv durchführen zu können, sieht eine Ausführungsform der Erfindung vor, daß die Inspektionsvorrichtung mindestens eine Kamera und/oder einen Sensor mit jeweils entsprechender Anzeigevorrichtung aufweist. Die Sensoren können nach völlig verschiedenen physikalischen Verfahren arbeiten, beispielsweise als mechanische Taster oder berührungslos arbeitende Sensoren, wie elektromagnetische oder kapazitive Näherungssensoren. Die Datenübertragung von der Kamera und/oder dem Sensor auf die jeweilige Anzeigevorrichtung, beispielsweise einen Monitor, geschieht zweckmäßigerweise fortlaufend und erfolgt vorzugsweise drahtlos, z.B. über Funk.

Eine Variante der Erfindung sieht vor, daß die Inspektionsvorrichtung mindestens eine Kamera und/oder einen Sensor mit jeweils entsprechendem an der Kamera bzw. dem Sensor angeordneten Datenspeicher aufweist. Dadurch kann ebenfalls auf Signalleitungen verzichtet werden, wodurch die konstruktive Ausgestaltung vereinfacht wird. Ebenso sind Energieversorgungsleitungen von außen überflüssig, wenn ein Energiespeicher, beispielsweise eine Batterie, mit dem Datenspeicher, dem Sensor oder der Kamera mitgeführt wird.

Um beim Auswerten der Daten eine Zuordnung der Meßergebnisse zum Innenraum der Gefäßreinigungsmaschine herstellen zu können, ist es zweckmäßig, im Innenraum der Gefäßreinigungsmaschine durch den Sensor oder die Kamera erfaßbare Markierungen anzubringen. Somit kann gezielt an der richtigen Stelle eine evtl. erforderliche Reparaturarbeit vorgenommen werden. Um einfachere Reparaturarbeiten sofort ausführen zu können, sieht eine Weiterbildung der Erfindung vor, daß die Inspektionsvorrichtung zusätzlich eine steuerbare Vorrichtung (Manipulator) zur Behebung einfacher Defekte aufweist.

Eine weitere Ausgestaltung der Erfindung sieht vor, daß an der Förderkette mindestens ein Träger auswechselbar angeordnet und zur Aufnahme der Inspektionsvorrichtung ausgebildet ist. Damit kann ein Träger, welcher beispielsweise zur Aufnahme einer Gefäßreinigungsvorrichtung für die Eigenreinigung der Gefäßreinigungsmaschine dient, problemlos von der Förderkette abgenommen und anschließend durch die Inspektionsvorrichtung ersetzt werden.

Denkbar ist auch, daß die Reinigungsvorrichtung und die Inspektionsvorrichtung gleichzeitig an verschiedenen Trägern angebracht sind, so daß das Ausräumen von Verunreinigungen auch unmittelbar kontrolliert werden kann.

Um beim Passieren der Gefäßaufgabe- und -abgabestation Kollisionen zwischen der vorbeigeführten Inspektionsvorrichtung und der Gefäßeinschub- bzw. - ausschubmechanik auszuschließen, kann diese Mechanik vorübergehend selbsttätig ausgekuppelt werden.

Der Inspektionsträger kann ferner vorteilhafterweise so ausgestaltet werden, daß er anstelle einer Förderkorbreihe in die Gefäßreinigungsmaschine einsetzbar ist. Diese Ausführung ist sinnvoll, wenn nur in bestimmten Zeitintervallen, z.B. täglich oder wöchentlich, eine Innenraumkontrolle notwendig ist. Nach dem Inspektionsvorgang kann der Träger aus der Maschine herausgenommen und wieder durch eine Förderkorbreihe ersetzt werden. Dadurch tritt im Normalbetrieb keine Minderung der Ausbringleistung ein.

Weitere Ausgestaltungen und Vorteile der erfindungsgemäßen Vorrichtung ergeben sich aus den Ansprüchen und der nachfolgenden Beschreibung der Ausführungsbeispiele.

Die Erfindung wird nachstehend anhand der Zeichnung näher erläutert. Die Zeichnung zeigt ein Ausführungsbeispiel der Erfindung. Hierbei stellen dar:
- Fig. 1: einen Längsschnitt durch eine Gefäßreinigungsmaschine und
- Fig. 2: einen Querschnitt entlang der Schnittlinie A-A in Fig. 1 mit einer Inspektionsvorrichtung.

Die Gefäßreinigungsmaschine weist eine Aufgabestation 1 für die in Förderkörbe 2 einzuschiebenden Gefäße 3, eine in Förderrichtung 4 sich bewegende Förderkette 5 zur Förderung der Gefäße 3 und ein Gleitblech 6 zur Unterstützung der Gefäße 3 an ihrer Bodenfläche beim Durchlauf durch die Gefäßreinigungsmaschine auf. Die Maschine ist durch ein Gehäuse 7 nach außen hin abgeschlossen. Innerhalb des Innenraumes 9 der Gefäßreinigungsmaschine sind ein Vorweichbad 30, ein Laugebad 10, Schmutz- und Scherbenaustragseinrichtungen 45, eine Etikettenaustragseinrichtung 50 und mehrere Spritzstationen 60 angeordnet. An der Abgabestation 40 verlassen die gereinigten Gefäße die Maschine.

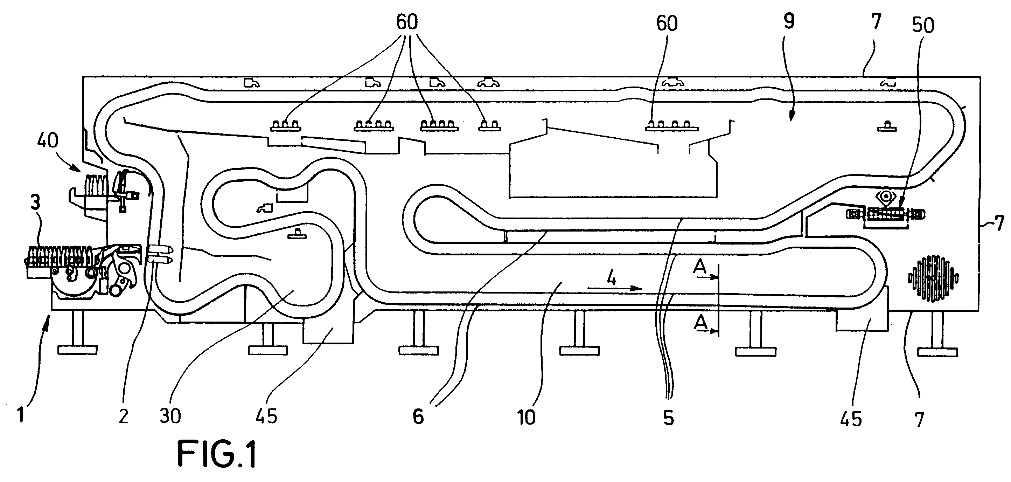

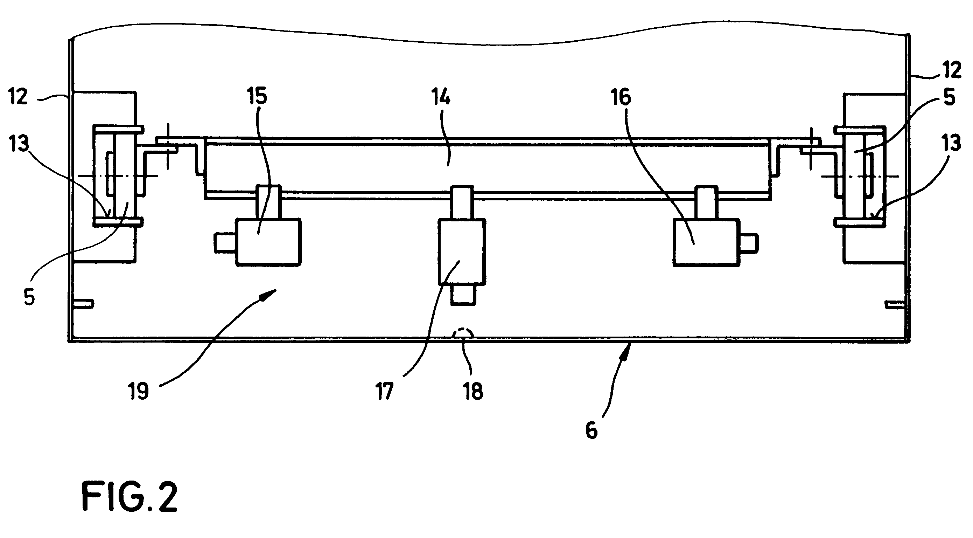

Die Fig. 2 zeigt einen Querschnitt durch das Gleitblech 6 entlang der Schnittlinie A-A in Fig. 1 . Das Gleitblech 6 bildet die Aufstandsfläche für die in den unten offenen Förderkörben stehenden Gefäße 3. Das Gleitblech 6 wird seitlich durch in Längsrichtung verlaufende Seitenwände 12 begrenzt. An jeder der Seitenwände 12 ist eine Kettenführung 13 für die Förderkette 5 befestigt. An der Förderkette 5 ist ein Träger 14 auswechselbar angeordnet, an welchem seitlich je eine Kamera 15, 16 und etwa mittig ein Sensor 17 befestigt ist. Unterhalb des Sensors 17 ist auf dem Gleitblech 6 ein Meßpunkt 18 angebracht. Die Kameras 15, 16 und der Sensor 17 bilden eine Inspektionsvorrichtung 19. Damit der Träger 14 die Aufgabestation 1 und die Abgabestation 40 ohne Kollision passieren kann, ist die Gefäßein- und -ausschubmechanik auskuppelbar gestaltet. Weiterhin ist an dem Träger 14 eine in der Zeichnung nicht dargestellte steuerbare Vorrichtung zur Behebung einfacher Defekte angeordnet. Eine derartige steuerbare Vorrichtung kann verfahrbar an dem Träger 14 gelagert sein und in Zusammenarbeit mit einer Kamera, beispielsweise den Kameras 15 oder 16, von außen bedient werden.

Durch die Kameras 15, 16 können die seitlichen Kettenführungen 13 optisch auf Verschleiß, Beschädigungen oder unerwünschte Ablagerungen, wie z.B. Schlamm, Etikettenreste und Scherben, hin untersucht werden. Hierzu können zur Verbesserung der Sicht am Träger 14 auch Scheinwerfer mitgeführt werden.

Am Träger 14 können noch weitere, nicht dargestellte, Kameras mit von den Kameras 15 und 16 abweichender Blickrichtung befestigt werden, um auch andere Bereiche der Maschine, wie z.B. die Etikettenaustragseinrichtung 50, Schmutz- und Scherbenaustragseinrichtungen 45, Spritzstationen 60 oder auch die Oberfläche des Gleitblechs 6 optisch überprüfen zu können.

Durch den in Fig. 2 dargestellten Sensor 17 wird der Meßpunkt 18 am Gleitblech 6 kontrolliert, wodurch eine durch den Verschleiß der Kettenführung 13 bedingte Abstandsverringerung erkennbar ist. Unterschreitet der Abstand ein vorgegebenes Mindestmaß, so wird durch eine Auswerteinrichtung ein Signal abgegeben. Auf diese Weise wird ein unerwünschtes Anschleifen der Förderkörbe 2 an dem Gleitblech 6 vermieden. Am Gleitblech 6 können mehrere derartige in Förderrichtung 4 hintereinander versetzte Meßpunkte 18 vorgesehen werden.

Die Inspektionsvorrichtung 19, welche aus den Kameras 15, 16 und dem Sensor 17 besteht, kann während des Betriebs der Gefäßreinigungsmaschine im Einsatz sein. Die Kameras und der Sensor sind hierbei gegen Flüssigkeitseintritt und aggressive Substanzen, wie Reinigungslauge, geschützt. Dadurch ist eine gefahrlose, zuverlässige, schnelle und fortlaufende Inspektion des Innenraumes der Gefäßreinigungsmaschine möglich. Jedoch ist auch eine Kontrolle des Innenraumes außerhalb des Produktionsbetriebs, z.B. in Verbindung mit Reinigungsarbeiten bei entleerten Tauchbädern, denkbar. Dabei können einfachere und billigere Sensoren und Kameras verwendet werden, welche nicht gesondert geschützt sein müssen.

## Patentansprüche

1. Gefäßreinigungsmaschine mit einer umlaufenden Förderkette (5), gekennzeichnet durch eine an der Förderkette (5) angeordnete Inspektionsvorrichtung (19).

2. Maschine nach Anspruch 1, dadurch gekennzeichnet, daß die Inspektionsvorrichtung (19) mindestens eine Kamera (15, 16) und/oder einen Sensor (17) mit jeweils entsprechender Anzeigevorrichtung aufweist.

3. Maschine nach Anspruch 1, dadurch gekennzeichnet, daß die Inspektionsvorrichtung (19) mindestens eine Kamera (15, 16), insbesondere Videokamera, und/oder einen Sensor (17) mit jeweils entsprechendem an der oder den Kameras (15, 16) bzw. dem Sensor (17) angeordneten Datenspeicher aufweist.

4. Maschine nach wenigstens einem der vorhergehenden Ansprüche, dadurch gekennzeichnet, daß im Innenraum (9) der Gefäßreinigungsmaschine durch den Sensor (17) oder die Kamera (15, 16) erfaßbare Meßpunkte (18) angebracht sind.

5. Maschine nach wenigstens einem der vorhergehenden Ansprüche, dadurch gekennzeichnet, daß der Inspektionsvorrichtung (19) eine steuerbare Vorrichtung zur Behebung einfacher Defekte und/oder Reinigung der Maschine zugeordnet ist.

6. Maschine nach wenigstens einem der vorhergehenden Ansprüche, dadurch gekennzeichnet, daß an der Förderkette (5) mindestens ein Träger (14) angeordnet und zur Aufnahme der Inspektionsvorrichtung (19) ausgebildet ist, wobei der Träger (14) vorzugsweise auswechselbar mit der Förderkette (5) verbunden ist.

7. Maschine nach wenigstens einem der vorhergehenden Ansprüche, dadurch gekennzeichnet, daß die Gefäßreinigungsmaschine eine Aufgabestation (1) und eine Abgabestation (40) mit einer auskuppelbaren Gefäßein- und -ausschubmechanik zum Einbringen und Entfernen der Gefäße aufweist.

8. Maschine nach Anspruch 7, dadurch gekennzeichnet, daß das Auskuppeln und nachfolgende Einkuppeln der Gefäßein- und -ausschubmechanik bei vorbeilaufender Inspektionsvorrichtung (19) selbsttätig erfolgt.

9. Maschine nach wenigstens einem der vorhergehenden Ansprüche, dadurch gekennzeichnet, daß der Inspektionsvorrichtung (19), insbesondere Kamera (15, 16), ein Leuchtmittel beigeordnet oder in diese integriert ist.

10. Maschine nach wenigstens einem der vorhergehenden Ansprüche, dadurch gekennzeichnet, daß der Inspektionsvorrichtung (19), insbesondere Kamera (15, 16), eine mitführbare Energieversorgung beigeordnet oder in diese integriert ist.

11. Maschine nach wenigstens einem der vorhergehenden Ansprüche, dadurch gekennzeichnet, daß die Inspektionsvorrichtung (19), insbesondere Kamera (15, 16) und/oder Sensor (17), mit einer Anzeigevorrichtung, beispielsweise Monitor, verbunden ist, und die Datenübertragung vorzugsweise drahtlos, insbesondere fortlaufend, erfolgt.

12. Maschine nach wenigstens einem der vorhergehenden Ansprüche, dadurch gekennzeichnet, daß die Inspektionsvorrichtung (19) Videokameras (15, 16) aufweist.

## Claims

1. Container cleaning machine with a revolving conveyor chain (5), characterised by an inspection device (19) arranged on the conveyor chain (5).

2. Machine according to claim 1, characterised in that the inspection device (19) comprises at least one camera (15, 16) and/or a sensor (17) each with a corresponding display device.

3. Machine according to claim 1, characterised in that the inspection device (19) comprises at least one camera (15, 16), especially a videocamera, and/or a sensor (17) each with a corresponding data store arranged on the camera or cameras (15, 16) or the sensor (17).

4. Machine according to at least one of the preceding claims, characterised in that measuring points (18) detectable by the sensor (17) or the camera (15, 16) are fitted in the interior (9) of the container cleaning machine.

5. Machine according to at least one of the preceding claims, characterised in that a controllable device for the removal of simple defects and/or cleaning the machine is associated with the inspection device (19).

6. Machine according to at least one of the preceding claims, characterised in that at least one support (14) is arranged on the conveyor chain (5) and constructed for receiving the inspection device (19), the support (14) being preferably connected in exchangeable manner to the conveyor chain (5).

7. Machine according to at least one of the preceding claims, characterised in that the container cleaning machine has an intake station (1) and a discharge station (40) with a disconnectable container infeed and discharge mechanism for the introduction and removal of the containers.

8. Machine according to claim 7, characterised in that the disconnection and subsequent connection of the container infeed and discharge mechanism when the inspection device (19) is passing takes place automatically.

9. Machine according to at least one of the preceding claims, characterised in that a means of illumination is associated with the inspection device (19), especially a camera (15, 16), or integrated in the latter.

10. Machine according to at least one of the preceding claims, characterised in that a transportable energy supply is associated with the inspection device (19), especially a camera (15, 16), or integrated in the latter.

11. Machine according to at least one of the preceding claims, characterised in that the inspection device (19), especially camera (15, 16) and/or sensor (17), is connected to a display device, for example a monitor, and the data transmission preferably takes place in wireless manner, especially continuously.

12. Machine according to at least one of the preceding claims, characterised in that the inspection device (19) comprises video cameras (15, 16).

## Revendications

1. Machine de nettoyage de récipients avec une chaîne de transport en circulation (6), caractérisée par un dispositif d'inspection (19), monté sur la chaîne de transport (5).

2. Machine suivant la revendication 1, caractérisée en ce que le dispositif d'inspection (19) présente au moins une caméra (15, 16) et/ou un détecteur (17), respectivement munis d'un dispositif d'affichage adéquat.

3. Machine suivant la revendication 1, caractérisée en ce que le dispositif d'inspection (19) présente au moins une caméra (15, 16), une caméra vidéo en particulier, et/ou un détecteur (17), avec une mémoire de données adéquate respectivement disposée sur la ou sur les caméras (15, 16) et/ou sur le détecteur (17).

4. Machine suivant l'une au moins des revendications précédentes, caractérisée en ce que des points de mesure (18), détéctables par la caméra (15, 16) ou par le détecteur (17), sont prévus dans l'espace interne (9) de la machine de nettoyage de récipients.

5. Machine suivant l'une au moins des revendications précédentes, caractérisée en ce qu'un dispositif, doté d'une possibilité de commande, est associé au dispositif d'inspection (19) pour la réparation de pannes simples et/ou le nettoyage de la machine.

6. Machine suivant l'une au moins des revendications précédentes, caractérisée en ce qu'un support (14) au moins est disposé sur la chaîne de transport (5), et est réalisé pour recevoir le dispositif d'inspection (19), le support (14) étant assemblé, d'une manière interchangeable de préférence, avec la chaîne de transport (5).

7. Machine suivant l'une au moins des revendications précédentes, caractérisée en ce que la machine de nettoyage de récipients présente un poste d'alimentation (1) et un poste de transfert (40), avec une mécanique d'insertion et d'extraction des récipients pouvant être désaccouplée, pour l'introduction et l'évacuation des récipients.

8. Machine suivant la revendication 7, caractérisée en ce que le découplage et le couplage consécutif de la mécanique d'insertion et d'extraction des récipients sont assurés automatiquement, lors du passage du dispositif d'inspection (19) devant cette mécanique.

9. Machine suivant l'une au moins des revendications précédentes, caractérisée en ce qu'un moyen d'éclairage est associé ou intégré au dispositif d'inspection (19), à la caméra (15, 16) en particulier.

10. Machine suivant l'une au moins des revendications précédentes, caractérisée en ce qu'une alimentation en énergie entraînable est associée ou intégrée au dispositif d'inspection (19), à la caméra (15, 16) en particulier.

11. Machine suivant l'une au moins des revendications précédentes, caractérisée en ce que le dispositif d'inspection (19), la caméra (15, 16) et/ou le détecteur (17) en particulier, sont reliés à un dispositif d'affichage, un moniteur par exemple, et en ce que la transmission des données est de préference assurée sans fil, en continu en particulier.

12. Machine suivant l'une au moins des revendications précédentes, caractérisée en ce que le dispositif d'inspection (19) présente des caméras vidéo (15, 16).
